# EUROPEAN PATENT APPLICATION

(11) **EP 4 831 073 A1**
(43) Date of publication of application: **28.10.2026**
(21) Application number: 25172601.4
(22) Date of filing: 25.04.2025
(51) Int. Cl.: B65B 7/16, B65B 31/02, B65B 57/04, B65B 59/00, B29C 65/00, B65B 41/12

(54) **PACKAGING MACHINE AND TOOL DRUM ROTATION PROCESS**

(71) Applicant: Italianpack S.p.A., 22100 Como (CO) (IT)
(72) Inventor: PETRINI, Tomaso, 22100 Como (CO) (IT); DAVIDE, Arrigo, 22075 Lurate Caccivio (CO) (IT); FRIGERIO, Massimo Pasqui, 22070 Montano Lucino (CO) (IT)
(74) Representative: Praxi Intellectual Property Lugano

(57) **Abstract**

The invention refers to a packaging machine (1) comprising a sealing station (5) with an upper tool part being configured as a rotatable tool drum (35) and with an upper film transportation system (6), which is configured to transport an upper film (7) in a tensioned manner below the upper tool part, and which is configured to release tension of the upper film (7) at least temporarily while the upper tool part rotates. The invention also refers to a corresponding tool drum rotation process.

## Description

The present invention refers to a packaging machine having a tool drum and an upper film transportation system according to claim 1. The invention further refers to a tool drum rotation process according to claim 15.

FR 2 971 489 A discloses a packaging machine, which is configured as a tray sealer having a lower tool part for receiving trays and an upper tool part being configured as a tool drum being rotatable to move one upper tool part being mounted on the tool drum into a position above the lower tool part for a sealing process. However, while rotating the tool drum to bring the upper tool part into the working position, there is the risk of damaging an upper film being tensioned below the tool drum. Damaging the upper film would result in a reconfiguration process, which delays the production.

Therefore, it is the object of the present invention to provide a packaging machine that can operate more efficiently even in case a tool drum rotation occurs for bringing an upper tool part into a working position.

This object can be solved by a packaging machine according to claim 1 and by a tool drum rotation process according to claim 15.

Improved embodiments of the invention can be provided by the subject matter of the dependent claims.

The present invention refers to a packaging machine with a sealing station, which comprises a tool drum with a plurality of different upper tool parts mounted thereon, wherein the tool drum is rotatable about a horizontal rotation axis to move one of the plurality of different upper tool parts into a working position for a sealing process. The inventive packaging machine further comprises an upper film transportation system for transporting an upper film in a tensioned manner below the tool drum. According to the invention, the upper film transportation system is configured to release tension of the upper film at least temporarily while a rotation of the tool drum takes place. This allows the tool drum to rotate without contacting the upper film or at least without contacting the upper film in a manner that makes the upper film breaking due to increased tensioning forces. In other words, this allows the upper film to loosen such that it is not affected by the tool drum's rotation in a manner to break. Thus, the present invention controls releasing tension of the upper film such that the rotation of the tool drum may not damage the upper film, which enables to maintain a continuous production process, as it can securely be prevented that the upper film breaks through.

Preferably, the upper film transportation system comprises a rewinding unit for collecting waste material, which is controllable to release tension of the upper film at least temporarily while the rotation of the tool drum takes place. Such a control to release the tension of the upper film may be conducted independent of the amount of waste material already collected by the rewinding unit. Preferably, the control to release the tension of the upper film takes place based on a received measuring signal, e.g. a detected measurement which triggers rotation of the tool drum.

According to an improved embodiment, the rewinding unit comprises at least one servomotor, which is controllable to release tension of the upper film at least temporarily while the rotation of the tool drum takes place. For example, the servomotor can be controlled to rewind waste material intermittingly with respect to a machine cycle, and can be selectively controlled to unwind waste material, i.e. to release tension of the upper film, when the tool drum will be rotated to bring another thereon mounted tool part into the working position.

Ideally, the servomotor comprises a drive shaft, which is controllable to rotate in a first direction for rewinding the waste material and is controllable to rotate in a second direction, being opposite to the first direction for unwinding the waste material to release tension of the upper film.

Preferably, the rewinding unit comprises a rewinding shaft. Ideally, the servomotor is connected via a belt drive, preferably via a double-belt drive, to the rewinding shaft for collecting waste material. Onto the rewinding shaft the waste material, i.e. upper film material with cutouts, can be collected when the servomotor is driven in the first direction.

It is conceivable that the rewinding unit comprises a drive rod, wherein the servomotor is connected to the drive rod. The drive rod may rotate to transport the waste material out of the sealing station, when the servomotor is driven in the first direction, and may rotate to feed the waste material into the sealing station, when the servomotor is driven in the second direction.

Ideally, the drive rod comprises rubber on its surface to provide a better grip for releasing tension of the upper film.

Preferably, the rewinding unit comprises a guiding system configured to assist a drawback of the waste material into the sealing station in a controlled manner during the rotation of the tool drum. The drive rod may be part of the guiding system.

It would be conceivable that the servomotor is configured to rotate the rewinding shaft as well as a drive rod synchronously. Preferably, the drive is configured to rotate the unwinding shaft counterclockwise and the drive shaft clockwise, in order to collect waste material on the unwinding shaft, and the drive may be controlled to rotate the unwinding shaft clockwise and to rotate the driving shaft counterclockwise in order to release tension of the upper film inside the sealing station.

Ideally, the guiding system comprises a pair of rotatable rods positioned upstream an adjustable roller arrangement when seen in a drawback direction of the waste material, wherein the pair of rotatable rods is configured to guide the waste material towards the roller arrangement in a predetermined direction irrespective of a volume of already collected waste material. The pair of rotatable rods may comprise the drive rod and a driven rod that may be spanned against the drive rod.

It would be beneficial if the adjustable roller arrangement comprises outer inclined rollers. This may result in a centering effect for transporting the waste material out from the sealing station and into the sealing station.

Preferably, the upper film transportation system comprises a film supply unit with a braking system that is configured to prevent infeed of the upper film into the sealing station while the rotation of the tool drum takes place.

According to one embodiment, the upper film transportation system comprises a preheating unit for the upper film. The preheating unit is configured to preheat the upper film before it enters the sealing station.

Preferably, the sealing station comprises a first RFID system for recognition of a lower tool part type, wherein the upper film transportation system is controllable for releasing tension of the upper film based on at least one measurement of the first RFID system. E.g. when the RFID system detects a lower tool part which is not compatible with the upper tool part being rotated into the working position, the upper film transportation unit is triggered to release tension of the upper film such that the tool drum may rotate without damaging the upper film to bring another upper tool part into the working position.

Preferably, the sealing station comprises a second RFID system for recognition of an upper tool part type, wherein the upper film transportation system is controllable for tensioning of the upper film based on at least one measurement of the second RFID system. By the second RFID system it may be detected that the correct upper tool part which is required with respect to the lower tool part used for the sealing process has arrived in the working position, which allows to rewind the waste material so that the upper film is again sufficiently tensioned below the tool drum for a new machine working cycle.

Ideally, the upper film transportation system comprises at least one photocell for detecting a mark on the upper film based on which a per-cycle infeed is controlled.

It would be conceivable that the packaging machine is a tray sealer. Preferably, the tray sealer is a drawer type tray sealer.

The invention refers to a tool drum rotation process at a sealing station of a packaging machine, in order to move one of a plurality of upper tool parts being mounted onto the tool drum into a working position. According to the present invention, an upper film transportation system releases tension of an upper film transported below the tool drum at least temporarily while a rotation of the tool drum takes place.

Releasing tension of the upper film enables the tool drum to rotate in such a manner that the upper film cannot be damaged. Specifically, it can be prevented by releasing tension of the upper film that the rotating tool drum pushes into the upper film to be further tensioned such that it breaks. In other words, by releasing the tension in the upper film, the tool drum is given enough space for rotating without getting into contact or at least without getting into such contact with the upper film by which the upper film breaks. This enables a more continuous production process due to fewer interruptions.

The present invention is described in more detail with respect to embodiments shown in the figures. Specifically,
- Figure 1: shows a packaging machine in form of a tray sealer in a perspective view,
- Figure 2: shows the packaging machine of Figure 1 in another perspective view,
- Figure 3: shows an enlarged perspective of a film supply unit,
- Figure 4: shows an enlarged perspective of a rewinding unit for waste material, and
- Figure 5: shows a sectional view of the packaging machine.

Same technical features are provided throughout the figures with same reference numerals.

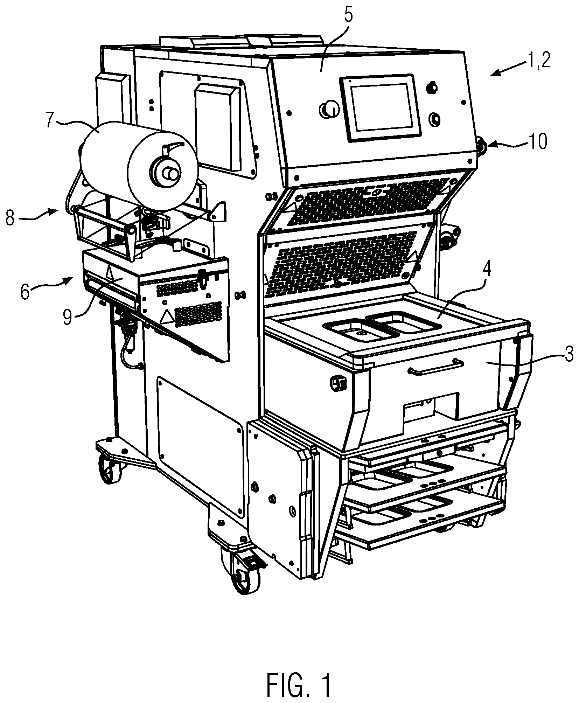

Figure 1 shows a packaging machine 1, which is configured as a tray sealer 2. The tray sealer 2 is configured as a drawer-type tray sealer 2 which comprises a lower tool part 3, which is configured as a drawer and which comprises a tray holder 4 for receiving trays. The tray sealer 2 further comprises a sealing station 5 into which the lower tool part 3 can be pushed for a sealing process.

Furthermore, Figure 1 shows that the tray sealer 2 comprises an upper film transportation system 6 for transporting an upper film 7 through the sealing station 5. The upper film transportation system 6 comprises an upper film supply unit 8, from which the upper film 7 is unwound and guided into the sealing station 5. Further, the upper film transportation system 6 comprises a preheating unit 9 for preheating the upper film 7 before it enters the sealing station 5.

Also, Figure 1 shows that the upper film transportation system 6 comprises a rewinding unit 10 for collecting waste material of the upper film 7. The upper film supply unit 8 and the rewinding unit 10 are located on opposite sides of the sealing station 5.

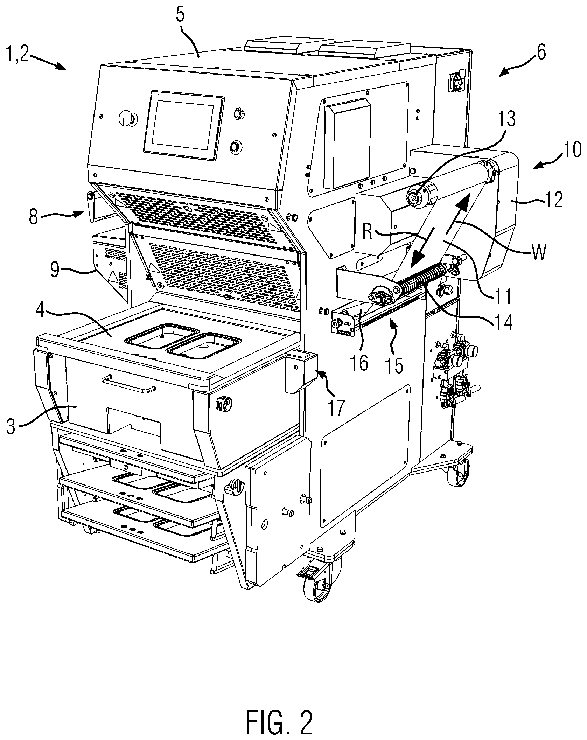

Figure 2 shows a different perspective of the tray sealer 2 as compared to Figure 1. Figure 2 shows the rewinding unit 10 for collecting waste material 11 in more detail. The rewinding unit 10 comprises at least one drive 12, which is configured to rotate an unwinding shaft 13 as well as a drive rod 14. According to Figure 1, the drive 12 is configured to rotate the unwinding shaft 13 counterclockwise and the drive shaft 14 clockwise, in order to collect waste material 11 on the unwinding shaft 13. Also, the drive 12 may be controlled to rotate the unwinding shaft 13 clockwise and to rotate the driving shaft 14 counterclockwise in order to release tension of the upper film 11 inside the sealing station 5.

Figure 2 also shows that the upper film transportation system 6 comprises a guiding system 15 with an adjustable roller arrangement 16 when seen in a drawback direction R of the waste material 11. The drive rod 14 may be part of the guiding system 15.

Figure 2 shows a first RFID system 17 for recognition of the tray holder 4 being mounted at the lower tool part 3, wherein the upper film transportation system 6 is controllable for releasing tension of the upper film 7 based on at least one measurement of the first RFID system 17.

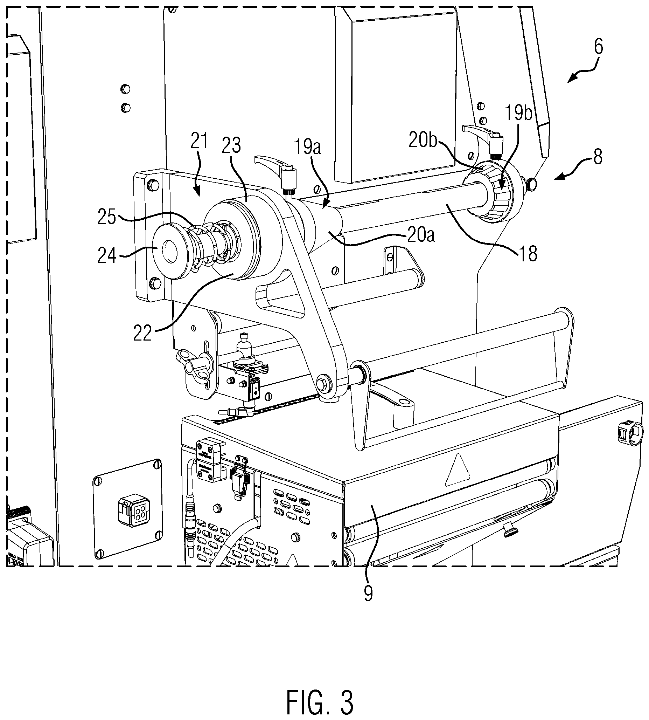

Figure 3 shows an enlarged perspective of the upper film supply 8 without an upper film 7 being mounted thereat. The upper film supply 8 comprises a rotatably mounted supply rod 18. The supply rod 18 is configured to carry a roll of upper film material. Such a roll of upper film material can be fixed onto the upper film supply rod 18 between a first fixing element 19a and a second fixing element 19b. The first fixing element 19a and the second fixing element 19b may be moved along the supply rod 18 to fix therebetween a roll of upper film material by thereat provided tapered sections 20a, 20b such that the film roll is mounted rotation fixed onto the supply rod 18.

The supply rod 18 may rotate wherein its rotation can be controlled by a brake unit 21. According to Figure 3, the brake unit 21 is configured as a friction brake having a braking disc 22, which is spring loaded against a stationary brake receiving element 23. Force of the brake disc 22 against the brake force receiving element 23 may be adjusted by an adjustment screw 24 and a spring 25, which is positioned between the adjustment screw 24 and the braking disc 22. By increasing the spring load, a braking force is increased accordingly, such that a forward feed of the upper film 7 into the sealing station 5 can be controlled in a tensioned manner. Due to the brake unit 21, when the drive 12 stops rewinding rotation, the upper film 7 maintains in its tensioned condition inside the sealing station 5. Also, when the drive 12 starts rewinding, the upper film 7 is transported through the sealing station 5 in a tensioned manner against the frictional force provided by the brake unit 21.

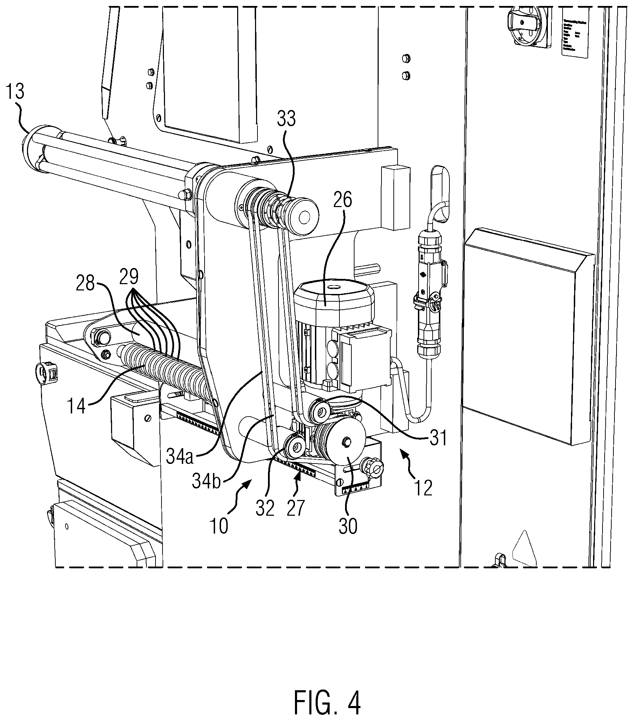

Figure 4 shows the rewinding unit 10 in an enlarged perspective in more detail. The rewinding unit 10 is shown without a casing. The drive 12 comprises a servomotor 26. The servomotor 26 is connected to the rewinding shaft 13 via a belt drive 27. The drive 12 is shown in Figure 4 as a worm gear drive that may also drive the drive rod 14.

As shown by Figure 4, a tensioning rod 28 is held against the drive rod 14, in order to enable the drive rod 14 to have enough grip with the waste material 11 to transport the same in the drawback direction R as well as in the opposite direction, i.e. in a rewinding direction W (see Figure 2).

Further, Figure 4 shows that the drive rod 14 comprises rubber 29 on its surface to provide a better grip at the waste material 11 to transport it in the drawback direction R in order to release tension of the upper film 7 inside the sealing station 5.

As shown by Figure 4, the belt drive 27 comprises a drive wheel 30, which is mounted onto an axle of the drive rod 14, which is driven by the servomotor 26 via a worm gear. The belt drive 27 further comprises a first pulley 31 and a second pulley 32.

In addition, Figure 4 shows that the belt drive 27 comprises a driven wheel 33, being mounted onto the rewinding shaft 13. The belt drive 27 comprises two rubber belts 34a, 34b, which are guided over the drive wheel 30, the first pulley 31 and the second pulley 32, as well as the driven wheel 33, in order to transmit a rotation of the servomotor 26 onto the rewinding shaft 13. Thus, according to Figure 4, the servomotor 26 is coupled by a reduction gear, i.e. a worm gear, to the drive rod 14, and is coupled via the belt drive 27 with the rewinding shaft 13. Thereby, rotation of the rewinding shaft 13 and the drive rod 14 may be synchronized.

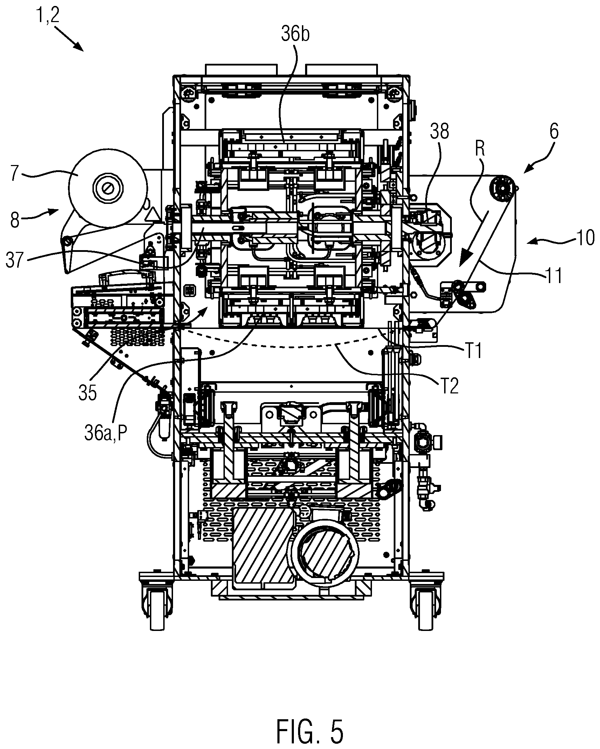

Figure 5 shows a cross-sectional view of the packaging machine 1. The packaging machine 1, according to Figure 5, comprises a tool drum 35 with a plurality of different upper tool parts 36a, 36b mounted thereon. The tool drum 35 is rotatable about a horizontal rotation axis 37. For rotating the tool drum 35, a tool drum drive 38 is provided.

By rotation of the tool drum 35, an upper tool part 36a or 36b can be moved into a working position P. According to Figure 5, the upper tool part 36a is positioned in the working position P. Figure 5 shows that the upper film 7 is held below the upper tool part 36a in a tensioned condition T1. Figure 5 schematically shows by a punctuated line that the upper film 7 may be brought into a tension-released condition T2 for rotating the tool drum 35.

For example, if the RFID system 17 illustrated in Figure 2 recognizes that the lower tool part 3 carries a tray holder 4, which does not fit to the upper tool part 36a being in the position as illustrated in Figure 5, then the drive 12 of the rewinding unit 10 is controlled to release tension of the waste material 11. Thus allowing the waste material 11 to be fed in the drawback direction R to release the tension of the upper film 7 inside the sealing station 5 (released condition T2), to give more space to the tool drum 35 for rotating another upper tool part 36b into the working position.

## Claims

1. Packaging machine (1) with a sealing station (5), wherein the sealing station (5) comprises a tool drum (35) with a plurality of different upper tool parts (36a, 36b) mounted thereon, wherein the tool drum (35) is rotatable about a horizontal rotation axis (37) to move one of the plurality of different upper tool parts (36a, 36b) into a working position (P) for a sealing process, and an upper film transportation system (6) for transporting an upper film (7) in a tensioned manner below the tool drum (35), **characterized in that** the upper film transportation system (6) is configured to release tension of the upper film (7) at least temporarily while a rotation of the tool drum (35) takes place.

2. Packaging machine according to claim 1, **characterized in that** the upper film transportation system (6) comprises a rewinding unit (10) for collecting waste material (11), which is controllable to release tension of the upper film (7) at least temporarily while the rotation of the tool drum (35) takes place.

3. Packaging machine according to claim 2, **characterized in that** the rewinding unit (10) comprises at least one servomotor (26) which is controllable to release tension of the upper film (7) at least temporarily while the rotation of the tool drum (35) takes place.

4. Packaging machine according to claim 3, **characterized in that** the servomotor (26) comprise a drive shaft which is controllable to rotate in a first direction for winding the waste material (11) and is controllable to rotate in a second direction, being opposite to the first direction, for unwinding the waste material (11) to release tension of the upper film (7).

5. Packaging machine according to claim 3 or claim 4, **characterized in that** the servomotor (26) is connected via a belt drive (27) to a rewinding shaft (13) for collecting waste material (11).

6. Packaging machine according to one of the preceding claims 2 to 5, **characterized in that** the rewinding unit (10) comprises a guiding system (15) configured to assist a drawback of the waste material (11) into the sealing station (5) in a controlled manner during the rotation of the tool drum (35).

7. Packaging machine according to claim 6, **characterized in that** the guiding system (15) comprises a pair of rotatable rods (14, 28) positioned upstream an adjustable roller arrangement (16) when seen in a drawback direction (R) of the waste material (11), wherein the pair of rotatable rods (14, 28) is configured to guide the waste material (11) towards the roller arrangement (16) in a predetermined direction irrespective of a volume of already collected waste material (11).

8. Packaging machine according to claim 7, **characterized in that** the adjustable roller arrangement (16) comprise outer inclined rollers.

9. Packaging machine according to one of the preceding claims, **characterized in that** the upper film transportation system (6) comprises a film supply unit (8) with a braking system (21) that is configured to prevent infeed of the upper film (7) into the sealing station (5) while the rotation of the tool drum (35) takes place.

10. Packaging machine according to one of the preceding claims, **characterized in that** the upper film transportation system (6) comprises a preheating unit (9) for the upper film (7).

11. Packaging machine according to one of the preceding claims, **characterized in that** the sealing station comprises a first RFID system (17) for recognition of a lower tool part type, wherein the upper film transportation system (6) is controllable for releasing tension of the upper film (7) based on at least one measurement of the first RFID system (17).

12. Packaging machine according to one of the preceding claims, **characterized in that** the sealing station comprises a second RFID system for recognition of an upper tool part type, wherein the upper film transportation system (6) is controllable for tensioning of the upper film (7) based on at least one measurement of the second RFID system.

13. Packaging machine according to one of the preceding claims, **characterized in that** the upper film transportation system (6) comprises at least one photocell for detecting a mark on the upper film (7) based on which a per cycle infeed is controlled.

14. Packaging machine according to one of the preceding claims, **characterized in that** the packaging machine (1) is a tray sealer (2).

15. Tool drum rotation process at a sealing station (5) of a packaging machine (1), in order to move one of a plurality of upper tool parts (36a, 36b) being mounted onto the tool drum (35) into a working position (P), **characterized in that** an upper film transportation system (6) releases tension of an upper film (7) transported below the tool drum (35) at least temporarily while a rotation of the tool drum (35) takes place.
